# EUROPÄISCHE PATENTANMELDUNG

(11) **EP 0 926 056 A2**
(43) Veröffentlichungstag der Anmeldung: **30.06.1999**
(21) Anmeldenummer: 98204299.6
(22) Anmeldetag: 18.12.1998
(51) Int. Cl.: B62L 3/02, B62L 1/02, B62M 1/04

(54) **Bremsvorrichtung für ein Fahrzeug, insbesondere ein Tretauto**

(30) Priorität: 18.12.1997 NL 1007837
(71) Anmelder: Van Ee, Teunis Karel, 3771 MB Barneveld (NL)
(72) Erfinder: Van Ee, Teunis Karel, 3771 MB Barneveld (NL)
(74) Vertreter: Seerden, Adrianus Maria

(57) **Zusammenfassung**

Die Erfindung bezieht sich auf eine Bremsvorrichtung für ein Fahrzeug, insbesondere ein Tretauto (1), welche Bremsvorrichtung manuell mit Hilfe eines Bremshebels (10) zu bedienen ist und direkt auf den Reifen eines Rads (4) des Fahrzeuges angreifen kann.

Gemäß der Erfindung hat die Bremsvorrichtung Mittel um den Bremshebel (10) in einen ersten Stand und einen zweiten Stand setzen zu können, in welchem ersten Stand die Bremsvorrichtung bedienbar ist, um das Rad abzubremsen, und in welchem zweiten Stand die Bremsvorrichtung das Rad verriegelt.

## Beschreibung

Die Erfindung bezieht sich auf eine Bremsvorrichtung für ein Fahrzeug, insbesondere ein Tretauto.

Es ist allgemein bekannt um bei Tretautos eine Bremsvorrichtung anzuwenden, die manuell zu bedienen ist, um durch das Hochziehen eines Bremshebels eine Bremse zu bedienen, die direkt gegen den Reifen eines Hinterrads gedrückt wird, um das Tretauto abzubremsen. Der Bremshebel ist mit der Bremse fest verbunden und rund eine Drehachse drehbar.

Ein Nachteil dieses bekannten Tretautos ist, daß der Bremshebel ziemlich weit nach oben herausrägt. Bei Transport des Tretautos zum Groß- und Einzelhandel sind das Steuer und der Sitz des Tretautos noch nicht montiert, so daß der Bremshebel das am weitesten nach oben herausragende Unterteil ist. Durch den herausragenden Bremshebel ist zusätzlich viel Transportraum für den Transport des Tretautos notwendig. Ein anderer Nachteil ist, daß das bekannte Tretauto keine Verriegelungsvorrichtung hat, wodurch das Tretauto zum Beispiel auf einer geneigten Straßendecke von selbst fahren könnte.

Es ist ein Ziel der Erfindung eine verbesserte Bremsvorrichtung zu verschaffen.

Dieses Ziel wird gemäß der Erfindung mit einer Bremsvorrichtung für ein Fahrzeug, insbesondere ein Tretauto, erreicht, welche Bremsvorrichtung manuell mit Hilfe eines Bremshebels zu bedienen ist und direkt auf den Reifen eines Rads des Fahrzeugs angreifen kann, wobei die Bremsvorrichtung Mittel hat um den Bremshebel in einen ersten Stand und einen zweiten Stand setzen zu können, in welchem ersten Stand die Bremsvorrichtung bedienbar ist um das Rad abzubremsen, und in welchem zweiten Stand die Bremsvorrichtung das Rad verriegelt.

Mit dieser Bremsvorrichtung ist es möglich um den Bremshebel während normaler Anwendung im ersten Stand zu behalten, wobei die Bremse auf der üblichen Weise bedient werden kann um bremsen zu können. Auch ist es möglich um den Bremshebel aus dem ersten Stand zum zweiten Stand zu versetzen, wodurch der Bremshebel in bestimmten Mittelständen nicht mehr nach oben herausragen braucht. Zum Schluß ist es möglich um den Bremshebel in den zweiten Stand zu setzen, in welchem Stand die Bremsvorrichtung auf den Reifen des Rads angrifft, um das Rad zu verriegeln. Mit der Bremsvorrichtung werden die beiden obenerwähnten Nachteile deshalb aufgehoben.

Gemäß einer Vorzugsausführung ist eine trennbare Kopplung versehen, die mit dem Bremshebel verbunden ist, womit der Bremshebel in dem ersten Stand an einen schwenkbaren Bremsschuh zu koppeln ist. Von dem ersten Stand aus kann der Bremshebel dann hoch gezogen werden, um den Bremsschuh gegen den Reifen zu drücken um bremsen zu können. Durch die trennbare Kopplung vom Bremsschuh zu entkuppeln, kann der Bremshebel in einen Stand gebracht werden, worin er hinsichtlich eines Tretautos ohne Steuer und Sitz nicht mehr herausrägt.

Gemäß einer weiteren Vorzugsausführung ist der Bremsschuh mit einer Schwenkachse verbunden, welche Schwenkachse mit einer damit hauptsächlich parallel verlaufenden Drehachse für den Bremshebel verbunden ist. Durch Drehung der Schwenkachse wird der Bremsschuh aus dem ersten Stand gegen den Reifen gedrückt, wobei der Bremshebel hinsichtlich seiner Drehachse nicht dreht. Durch das Entkuppeln der trennbaren Kopplung ist der Bremshebel aus dem ersten Stand rund seine Drehachse drehbar.

Vorzugsweise ist die trennbare Kopplung im zweiten Stand von der Schwenkachse entkuppelt, so daß der Bremshebel so weit gedreht werden kann, daß ein Unterteil der Bremsvorrichtung gegen den Reifen drückt um diesen zu verriegeln.

Vorzugsweise ist der Bremshebel von einer federnden Klammer zur Kopplung an die Schwenkachse des Bremsschuhs versehen, so daß der Bremshebel mit einiger Kraft an bzw. vom Schwenkschuh zu (ent)kuppeln ist, ohne daß Schrauben oder so etwas nötig sind.

Die Klammer ist vorzugsweise eine Wicklungsfeder, die mit einem Ende an dem Bremshebel angehakt ist, und die beim anderen Ende einen Riegelhaken für Kopplung an die Schwenkachse hat, wobei die Feder vorzugsweise eine Drahtdicke von 2 bis 3 Millimeter hat.

Gemäß einer Vorzugsausführung ist der Bremshebel von einer Drehbuchse zur Drehung um die Drehachse versehen, welche Drehbuchse von einem Nocken, der im ersten Stand einen Anschlag gegen den Rahmen des Fahrzeuges hat, versehen ist, so daß der Bremshebel im ersten Stand eine feste Position hat. Das Gewicht des Bremshebels hält den Nocken gegen den Rahmen gedrückt.

Gemäß einer weiteren Vorzugsausführung ist der Nocken derart positioniert, daß dieser im zweiten Stand einen Anschlag gegen die Verbindung zwischen der Schwenkachse und der Drehachse hat. Durch diese Positionierung kann der Bremshebel im zweiten Stand hinsichtlich seiner Drehachse nicht weiter drehen.

Vorzugsweise hat der Nocken eine derartige Dicke, daß der Bremsschuh den Rad verriegelt, wenn der Nocken im zweiten Stand zwischen dem Rahmen und der Verbindung zwischen der Schwenkachse und der Drehachse gesperrt ist. Dadurch daß der Nocken zwischen dem Rahmen und der Verbindung zwischen der Schwenkachse und der Drehachse gesperrt ist, kann der Bremshebel nicht von selbst rund die Drehachse zurückdrehen, und dadurch daß zu gleicher Zeit der Nocken eine geeignete Dicke hat, ist die Schwenkachse soweit geschwenkt, daß der Bremsschuh auf den Reifen drückt und das Rad verriegelt. Die Bremsvorrichtung ist also fixiert, und das Fahrzeug in seinem Parkstand verriegelt.

Gemäß einer Vorzugsausführung ist die Schwenkachse für den Bremsschuh mit einem gegenüberliegenden Bremsschuh für ein gegenüberliegendes Rad verbunden, so daß mit dem Bremshebel auf beiden Hinterrädern zugleich gebremst wird, um ein gleichmäßiges Bremsen zu erreichen.

Die Erfindung bezieht sich auch auf ein Fahrzeug, insbesondere ein Tretauto, von einer Bremsvorrichtung wie oben beschrieben, versehen.

Die Erfindung wird hierunter an hand eines Ausführungsbeispiels, unter Verweisung nach den Zeichnungen, erläutert.

Figur 1 zeigt auf schematische Weise ein Tretauto mit einer Bremsvorrichtung gemäß der Erfindung.

Figur 2 zeigt auf schematische Weise ein perspektivisches Ansehen der Bremsvorrichtung gemäß der Erfindung und ein Teil des Rahmens des Tretautos.

Figur 3 zeigt die Bremsvorrichtung gemäß Figur 2 in Seitenansicht im ersten Stand.

Figur 4 zeigt die Bremsvorrichtung gemäß Figur 3 im Bremsstand.

Figur 5 zeigt die Bremsvorrichtung gemäß Figur 2 im zweiten, verriegelten Stand.

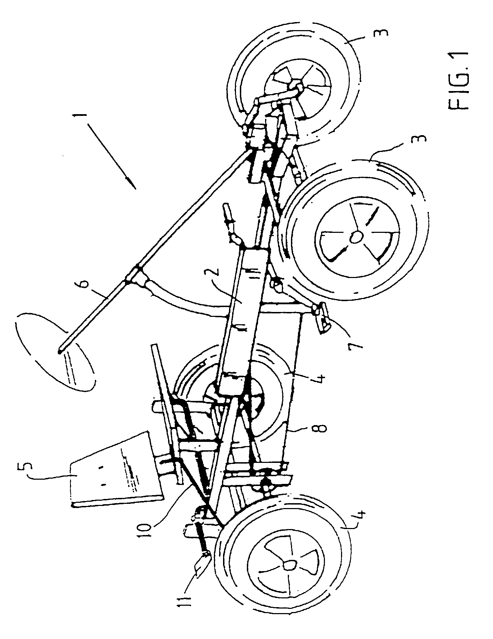

Figur 1 zeigt ein übliches Tretauto 1 mit einem Rahmen 2, Vorderrädern 3, Hinterrädern 4, einem Sitz 5, einem Steuer 6, Pedalen 7 für das Antreiben der Hinterräder 4 mit Hilfe einer Kette 8, einem Bremshebel 10 und einem Bremsschuh 11. Der Bremsschuh 11 ist mittels einer Verbindungsvorrichtung mit einem zweiten Bremsschuh (nicht sichtbar) für das andere Hinterrad verbunden. Die Bremsvorrichtung gemäß der Erfindung ist in Figur 1 nicht wiedergegeben.

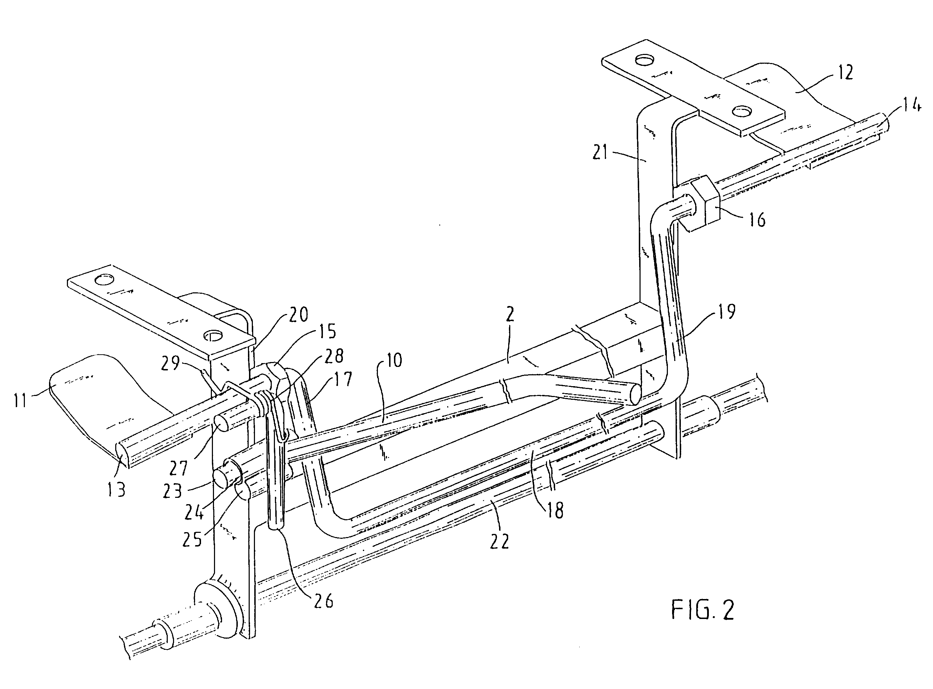

Figur 2 zeigt die Bremsvorrichtung gemäß der Erfindung. Gezeigt wird ein Teil des Rahmens 2, auf dem an beiden Enden eine vertikale Stütze 20, 21 angeordnet sind. In den unteren Enden der vertikalen Stützen 20, 21 ist die Drehachse 22 der beiden Hinterräder gelagert. Die beiden Bremsschuhe 11, 12 für die Hinterräder sind beziehungsweise mit einer Schwenkachse 13, 14 verbunden, die drehbar in den an den vertikalen Stützen 20, 21 angeordneten Drehpunkte in Form von Muttern 15, 16 aufgenommen sind. Die Schwenkachsen 13, 14 sind mit so gut wie rechtwinklig umgesetzten Teilen 17, 19 verbunden, die ihrerseits durch ein Verbindungsteil 18 verbunden sind. Mit Hilfe der also umgesetzten Verbindungsstange 13, 17, 18, 19, 14 werden die Bremsschuhe 11, 12 gleichzeitig verdreht um auf den Hinterrädern (nicht wiedergegeben) abzubremsen.

An dem umgesetzten Teil 17 ist ein(e) Stangenende oder Drehachse 23 angeordnet, die parallel zu der Schwenkachse 13 verläuft. Um das Stangenende 23 ist eine Drehbuchse 24 angeordnet, die mit dem Bremshebel 10 verbunden ist. Gegen die Drehbuchse 24 und den Bremshebel 10 ist eine Stange 26 angeordnet, die senkrecht auf der Schwenkachse 13 steht. Die Stange 26 hat ein umgebogenes Teil 27, das parallel zu der Schwenkachse 13 verläuft und das durch Hochziehen des Bremshebels 10 gegen die Schwenkachse 13 zu ruhen kommen kann. Das umgebogene Teil 27 ist von einer Wicklungsfeder 28 versehen, die mit ihrem einen Ende um die Stange 26 gehakt ist, um die Wicklungsfeder 28 gegen drehen zu fixieren, und die an ihrem anderen Ende zu einem Riegelhaken 29 gebildet ist, der über die Schwenkachse 13 haken kann. Ein Nocken 25 ist gegen die Drehbuchse 24 und die Stange 26 angeordnet und bildet einen Anschlag gegen die Stütze 20.

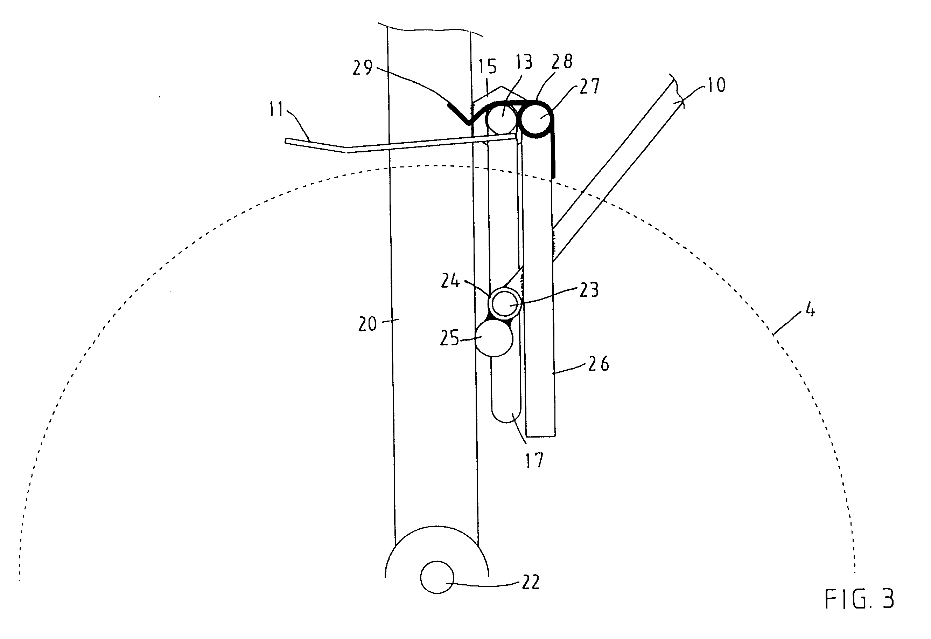

Die Wirkung der Bremsvorrichtung gemäß der Erfindung wird an hand der Figuren 3, 4 und 5 erläutert werden.

Figur 3 zeigt die Bremsvorrichting in Seitenansicht in ihrem ersten Stand, worin die Bremsvorrichtung als Bremse gebrauchsfertig ist. Der Verriegelungshaken 29 ist über die Schwenkachse 13 gehakt, wodurch der Bremshebel 10 über die Stange 26 mit dem Bremsschuh 11 gekoppelt ist. Durch das Festhaken des Verriegelungshakens 29 kan der Bremshebel 10 nicht rund die Drehachse 23 drehen. Die ganze Bremsvorrichtung kann jetzt nur rund die Schwenkachse 13 drehen, und durch das Gewicht des herausragenden Bremshebels 10 wird der Nocken 25 gegen die vertikale Stütze 20 gedrückt. In diesem Stand ist der Bremsschuh 11 auf Abstand über dem Rad 4 anwesend, das durch eine Strichpunktlinie wiedergegeben ist.

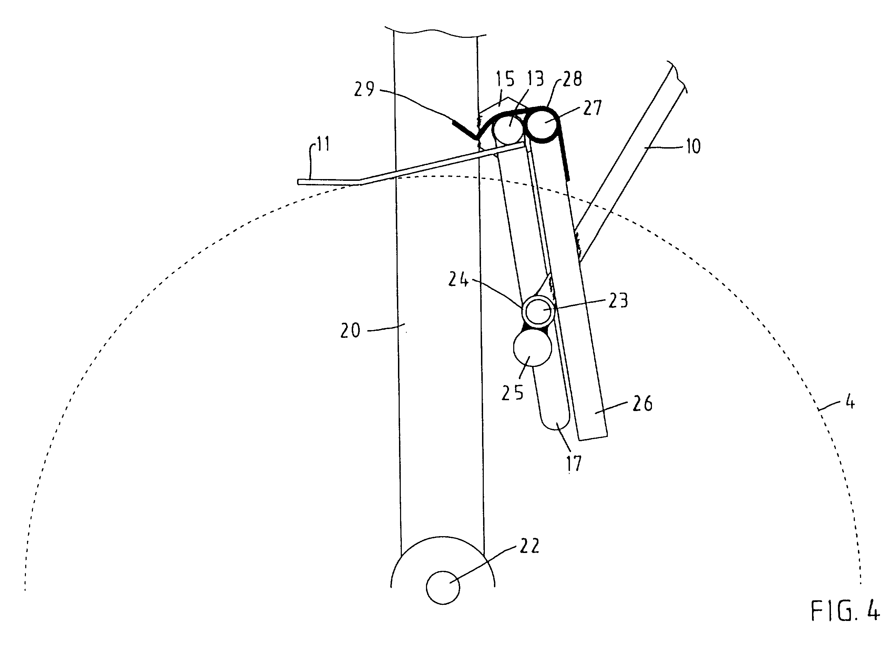

Um zu bremsen wird der Bremshebel 10 durch den Fahrer des Tretautos hoch gezogen, wie in der Figur 4 wiedergegeben ist. Das umgebogene Teil 27 mit der Wicklungsfeder 28 wird bei dem Hochziehen des Bremshebels 10 gegen die Schwenkachse 13 gedrückt, so daß der Bremshebel 10 noch immer nicht hinsichtlich der Drehachse 23 drehen kann. Drehung findet nur rund die Schwenkachse 13 statt, und der Bremsschuh 11 wird gegen den Rad 4 gedrückt.

Wenn es gewünscht ist das Tretauto ohne Sitz und Steuer zu transportieren, wobei der Bremshebel nicht nach oben herausrägt, dann wird der Bremshebel aus dem Stand gemäß Figur 3 mit Kraft nach unten gedrückt, wodurch der Verriegelungshaken 29 gegen die Federkraft der Wicklungsfeder 28 nach oben gedrückt wird und über die Schwenkachse 13 gezwungen wird, wonach der Bremshebel 10 frei rund die Drehachse 23 drehen kann. Der Bremshebel 10 kann dann in einen nicht so weit nach oben herausragenden Stand gebracht werden, wodurch das Tretauto zum Beispiel in einem möglichst kleinen Karton transportiert werden kann.

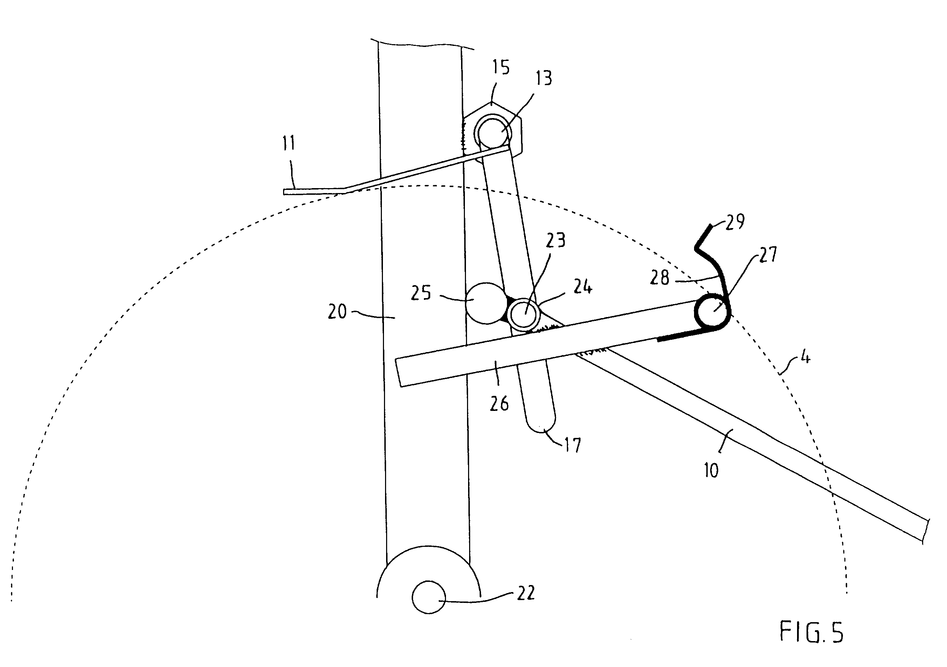

Figur 5 zeigt die Bremsvorrichtung nachdem der Verriegelungshaken 29 von der Schwenkachse 13 entkuppelt worden ist, und wobei der Bremshebel 10 in den zweiten Stand gesetzt ist, um das Rad 4 mit Hilfe des Bremsschuhs 11 zu verriegeln. Dabei wird der Bremshebel 10 möglichst weit rund die Drehachse 23 gedreht, bis der Nocken 25 einen Anschlag gegen das umgesetzte Stangenteil 17 an der Schwenkachse 13 hat. Zu gleicher Zeit ist der Nocken so weit rund die Drehachse 23 gedreht, daß seiner Anschlagspunkt gegen die vertikale Stütze 20 über die Senkrechte ab der Achse der Drehachse 23 auf der Stütze 20 liegt. Der Nocken ist also zwischen dem Rahmen 20 und dem umgesetzten Stangenteil 17 gesperrt, dadurch daß der Nocken 20 eine derartige Dicke hat, daß in diesem zweiten Stand der Bremsschuh 11 auf den Reifen des Rads 4 drückt. Der Bremshebel 10 kann dadurch nicht rund die Drehachse 23 drehen und das Tretauto ist in seinem Parkstand verriegelt.

Um das Rad zu verriegeln muß der Bremshebel 10 aus der frei rund die Drehachse 23 drehbare Lage in den zweiten, verriegelten Stand gezwungen werden durch den Bremshebel 10 mit zusätzlicher Kraft nach unten zu zwingen, gegen die Federkraft des Bremsschuhs 11 auf dem Reifen des Rads 4, wodurch der Nocken 25 der Stütze 20 entlang zu der gesperrten Lage wie in Figur 5 gezeigt, gezwungen wird.

Um das Rad zu entriegeln muß der Bremshebel 10 mit Kraft hoch gezogen werden, um den Nocken 25 gegen die Kraft des Bremsschuhs 11 auf dem Rad 4 aus seinem verriegelten Stand nach unten zu zwingen, wonach der Bremshebel 10 wieder frei rund die Drehachse 23 drehbar ist und der Bremsschuh 11 nicht mehr auf den Rad gedrückt wird.

## Patentansprüche

1. Bremsvorrichtung für ein Fahrzeug, insbesondere ein Tretauto, welche Bremsvorrichtung manuell mit Hilfe eines Bremshebels zu bedienen ist und direkt auf den Reifen eines Rads des Fahrzeugs angreifen kann, wobei die Bremsvorrichtung Mittel hat um den Bremshebel in einen ersten Stand und einen zweiten Stand setzen zu können, in welchem ersten Stand die Bremsvorrichtung bedienbar ist, um das Rad abzubremsen, und in welchem zweiten Stand die Bremsvorrichtung das Rad verriegelt.

2. Bremsvorrichtung gemäß Anspruch 1, wobei der Bremshebel mit einer trennbaren Kopplung verbunden ist, welche Kopplung in dem ersten Stand an einen schwenkbaren Bremsschuh gekoppelt ist, der durch das Anziehen des Bremshebels schwenkt und auf den Reifen drückt.

3. Bremsvorrichtung gemäß Anspruch 2, wobei der Bremsschuh mit einer Schwenkachse verbunden ist, welche Schwenkachse mit einer damit hauptsächlich parallel verlaufenden Drehachse für den Bremshebel verbunden ist, wobei vorzugsweise die trennbare Kopplung in dem zweiten Stand von der Schwenkachse entkuppelt ist, damit ein Teil der Bremsvorrichtung in diesem zweiten Stand auf den Reifen drückt, um das Rad zu verriegeln.

4. Bremsvorrichtung gemäß Anspruch 3, wobei der Bremshebel von einer federnden Klammer zur Kopplung an die Schwenkachse des Bremschuhs versehen ist.

5. Bremsvorrichtung gemäß Anspruch 4, wobei die Klammer eine Wicklungsfeder ist, die mit einem Ende an dem Bremshebel angehakt ist und die beim anderen Ende einen Riegelhaken für Kopplung an die Schwenkachse besitzt, wobei vorzugsweise die Feder eine Drahtdicke von 2 bis 3 Millimeter hat.

6. Bremsvorrichtung gemäß Anspruch 3, 4 oder 5, wobei der Bremshebel von einer Drehbuchse zur Drehung um die Drehachse versehen ist, welche Drehbuhse von einem Nocken, der in dem ersten Stand einen Anschlag gegen den Rahmen des Fahrzeuges hat, versehen ist.

7. Bremsvorrichtung gemäß Anspruch 5, wobei der Nocken derart positioniert ist, daß dieser im zweiten Stand einen Anschlag gegen die Verbindung zwischen der Schwenkachse und der Drehachse hat, wobei vorzugsweise der Nocken eine derartige Dicke hat, daß im zweiten Stand der Nocken zwischen dem Rahmen und der Verbindung zwischen der Schwenkachse und der Drehachse gesperrt ist und daß gleichzeitig der Bremsschuh auf den Rad drückt, um den Rad zu verriegeln.

8. Bremsvorrichtung gemäß einem der Ansprüche 3 bis einschließlich 7, wobei die Schwenkachse für den Bremsschuh mit einem gegenüberliegenden Bremsschuh für ein gegenüberliegendes Rad verbunden ist.

9. Fahrzeug, im besonderen ein Tretauto, von einer Bremsvorrichtung gemäß einem der vorabgehenden Ansprüche versehen.

10. Bremse für ein Fahrzeug, im besonderen ein Tretauto, von einem Bremshebel für Hand bedienung versehen, welche Bremse von einer trennbaren Kopplung um den Bremshebel mit einem Bremsschuh zu koppeln versehen ist, um bremsen zu können, und um den Bremshebel vom Bremsschuh zu entkuppeln, um das Fahrzeug mit Hilfe von dem Bremshebel verriegeln zu können.

11. Handbremse für Fahrzeuge, im besonderen Tretautos, umfassend einen Rahmen, einen Bremskörper, Mittel für das Halten eines Bremskörpers, welche Mittel mittels erster Verbindungsglieder mit dem Rahmen verbunden sind, Mittel für das Bewegen der Haltemittel von einem freien Stand nach einem ersten Bremsstand und wieder zurück, wobei die Haltemittel für Bewegung des Bremskörpers nach einem zweiten Bremsstand angeordnet sind, wobei vorzugsweise die Verbindungsmittel Mittel für das von erstem Bremsstand nach dem freien Stand Zwingen von den Haltemitteln umfassen und wobei vorzugsweise die Haltemittel angeordnet sind, um von dem freien Stand nach dem zweiten Bremsstand und zurück zu bewegen, via Durchgang durch einen toten Punkt.
